# FASCICULE DE BREVET EUROPEEN

(11) **EP 0 389 355 B1**
(45) Date de publication et mention de la délivrance du brevet: **10.03.1993**
(21) Numéro de dépôt: 90400746.5
(22) Date de dépôt: 20.03.1990
(51) Int. Cl.: A01G 31/00

(54) **Substrat pour la culture hors-sol**
Substrat für erdlose Kultur
Substrate for soilless culture

(30) Priorité: 21.03.1989 FR 8903651
(43) Date de publication de la demande: 26.09.1990
(73) Titulaire: ISOVER SAINT-GOBAIN, F-92400 Courbevoie (FR)
(72) Inventeur: De Graaf, Martien, Vijhuizen (NL); Vos, Jacques, F-78400 Chatou (FR); Plantard, Dominique, F-75016 Paris (FR)
(74) Mandataire: Le Vaguerèse, Sylvain Jacques

(56) Documents cités:
- EP-A- 0 176 134
- EP-A- 0 277 397
- EP-A- 0 301 619
- FR-A- 2 312 192

## Description

L'invention concerne les techniques de culture hors-sol. Plus précisément, l'invention se rapporte aux techniques dans lesquelles la culture met en jeu plusieurs étapes successives de croissance des plantes, chaque étape conduisant à l'utilisation d'un substrat offrant un volume supérieur à celui du précédent pour permettre un développement satisfaisant du système racinaire de la plante.

Dans les modes intensifs de culture hors-sol, une bonne gestion des matériaux et de l'espace disponible conduit à une succession d'étapes correspondant à la mise en oeuvre de substrats spécifiques.

Le mode le plus répandu à l'heure actuelle dans les cultures hors-sol en serre comporte ainsi au moins deux étapes successives. La première étape correspond à la croissance initiale des plants. Ceux-ci étant peu volumineux et présentant un développement limité du système racinaire, le professionnel utilise de préférence à ce stade un substrat de volume restreint. Ceci permet de multiplier le nombre de plants cultivés sur un espace limité. Cela permet aussi de minimiser le volume de solution nutritive nécessaire pour entretenir le substrat dans les conditions adéquates pour le développement des plants. Dans une deuxième étape, les plants qui ont grandi sur ces substrats de volume limité sont disposés, avec le premier substrat, sur un deuxième substrat offrant un volume plus important, et ordinairement espacés les uns des autres.

L'invention est relative aux substrats minéraux sur lesquels sont développés les plants ne requérant qu'un volume limité dont l'ordre de grandeur est de 1 dm³. Plus précisément, l'invention est relative à des substrats en fibres minérales tels que ceux constitués de laine de verre ou de laine de roche.

Les substrats considérés selon l'invention sont de forme générale parallélépipèdique. Cette forme est celle qui, du point de vue des producteurs comme des utilisateurs, est sensiblement la plus pratique. Le transport de ces substrats, en évitant tout volume perdu, en est amélioré. Leur production en est aussi beaucoup facilitée et se prête à une automatisation poussée. Ces avantages sont très sensibles pour des produits qui doivent nécessairement être proposés à des prix très bas. Pour l'utilisateur, la forme parallélépipèdique permet des regroupements commodes sur une surface réduite de ces éléments dans les stades de la culture où les plants étant peu développés, il est avantageux de minimiser la surface occupée.

Pour la commodité de l'exposé, nous désignerons dans la suite ces éléments de substrats sous la nom de "cubes" étant entendu qu'ils ne présentent pas nécessairement, ni même généralement, une forme vraiment cubique. Ce nom est néanmoins choisi car il correspond à celui qui est ordinairement retenu par les utilisateurs.

Il est nécessaire pour bien comprendre le problème que se propose de résoudre l'invention de détailler davantage le mode usuel d'utilisation de ces "cubes".

Dans les modes de culture intensive qui représentent les débouchés les plus significatifs pour ce type de produits que sont les "cubes", ceux-ci sont dans un premier temps disposés les uns contre les autres sur une large surface. Dans ce type d'arrangement, il est nécessaire d'aménager à la fois une irrigation satisfaisante et une aération convenable pour assurer la croissance la plus complète et la plus rapide des plants. L'irrigation peut être effectuée soit par la partie supérieure des cubes, soit par leur base, c'est-à-dire la partie reposant sur le sol. En pratique, les deux modes peuvent être combinés. Souvent les cubes sont disposés dans un ensemble qui forme une sorte de bac capable de recevoir la solution d'irrigation pour immerger partiellement les cubes. La solution s'élève à un niveau suffisant par rapport à la hauteur des cubes pour que ceux-ci soient entièrement imbibés. Pour des cubes d'une dizaine de centimètres de hauteur, le niveau temporaire de la solution d'irrigation atteint par exemple le tiers de la hauteur du cube. La solution s'élève ensuite dans le substrat par capillarité. Cette irrigation effectuée, la solution d'irrigation est évacuée et récupérée pour une opération ultérieure. Ce type d'opération d'irrigation est renouvelé suivant un rythme dépendant à la fois de la culture considérée et des conditions ambiantes (saison, température, évaporation...). Après un certain développement des plants, il est usuel d'écarter les cubes les uns des autres pour offrir plus d'espace et de lumière. A ce stade encore, l'irrigation est avantageusement conduite comme indiqué ci-dessus, mode que l'on désigne par le terme de "subirrigation".

Dans ces étapes de la culture sur cubes, nous avons vu comment pouvait être effectuée l'irrigation. Nous avons dit aussi qu'il était nécessaire d'assurer une bonne aération des racines entre les irrigations successives. Cette aération est une condition nécessaire au bon développement de celles-ci. Les cubes traditionnels utilisés présentent une base plane reposant entièrement sur le sol ou, plus exactement, sur le fond du bac ou encore sur le revêtement, le plus souvent un film imperméable recouvrant le sol et isolant les cubes de celui-ci. Dans toutes ces applications, une difficulté apparaît. La face inférieure des cubes tend, au contact du support sur lequel elle repose, à maintenir un film liquide après que l'irrigation ait cessé. En d'autres termes, lorsque l'on évacue la solution d'irrigation, que celle-ci ait été introduite par subirrigation ou par irrigation par la face supérieure des cubes, le contact entre le cube et son support entretient, par ce que l'on peut nommer un effet de surface, un film liquide continu qui s'oppose au drainage normal du cube sous l'effet de la gravité. Dans ces conditions, la rétention d'eau se trouve prolongée de façon substantielle compromettant l'établissement du rapport air/eau le plus favorable.

Pour rétablir un drainage rapide de la solution après chaque opération d'irrigation, une technique développée chez les utilisateurs a été de disposer sous les cubes un matériau poreux ou des caillebotis qui en rompant le contact entre les cubes et leur support éliminent cet effet de surface. Ces moyens ont cependant l'inconvénient de compliquer l'entretien des aires de culture. Ils doivent notamment être stérilisés entre chaque nouvelle culture. Une autre solution (EP-A- 176 134) utilisée a consisté à ménager des rainures sur la face inférieure des cubes. Ces rainures, qui présentent de l'ordre de 1 à 2 centimètres de profondeur et de largeur, fractionnent le film d'une façon qui améliore le drainage et, par suite, l'aération des cubes. Ces rainures permettent de réduire la surface de contact d'environ un tiers et le retour à un équilibre air/eau approprié dans un délai sensiblement écourté après chaque irrigation. Il reste cependant à la base du cube une surface encore très conséquente en contact avec le support et, même réduit, le film liquide sous-jacent reste présent à ces points de contact.

L'invention se propose de fournir des substrats pour la culture des plants, de forme parallélépipèdique présentant, dans leur utilisation, une surface de contact avec le support sur lequel ils reposent réduite au minimum nécessaire requis pour leur stabilité.

Les matériaux des cubes, qu'il s'agisse de fibres de verre ou de fibres de roche, sont choisis suffisamment "rigides" pour qu'ils ne se déforment pas sensiblement sous l'effet de leur propre poids, mêmes lorsqu'ils sont imbibés de solution d'irrigation. Ceci est obtenu en choisissant des feutres dont la densité est suffisante d'une part et dont la structure renforce la rigidité.

En particulier, l'orientation dominante des fibres peut être choisie de façon à améliorer la résistance à l'écrasement. Il est possible aussi de rendre ces feutres plus résistants par un enchevêtrement plus homogène des fibres. On peut encore, dans une certaine mesure, choisir les dimensions des fibres (diamètre, longueur) selon les principes connus pour déterminer les caractéristiques mécaniques dans les applications isolation de ce type de feutres.

Pour répondre aux exigences de l'invention, les cubes présentent à leur face inférieure des protubérances sur lesquelles, à l'utilisation, les cubes reposent. Les protubérances sont avantageusement du même matériau que celui dont est constitué le substrat. La surface de contact de ces protubérances avec le support sur lequel elles reposent reste inférieure au dixième de la surface totale de la base totale du cube et, de préférence, inférieure au vingtième.

La forme des protubérances est choisie principalement en fonction de la commodité de réalisation.

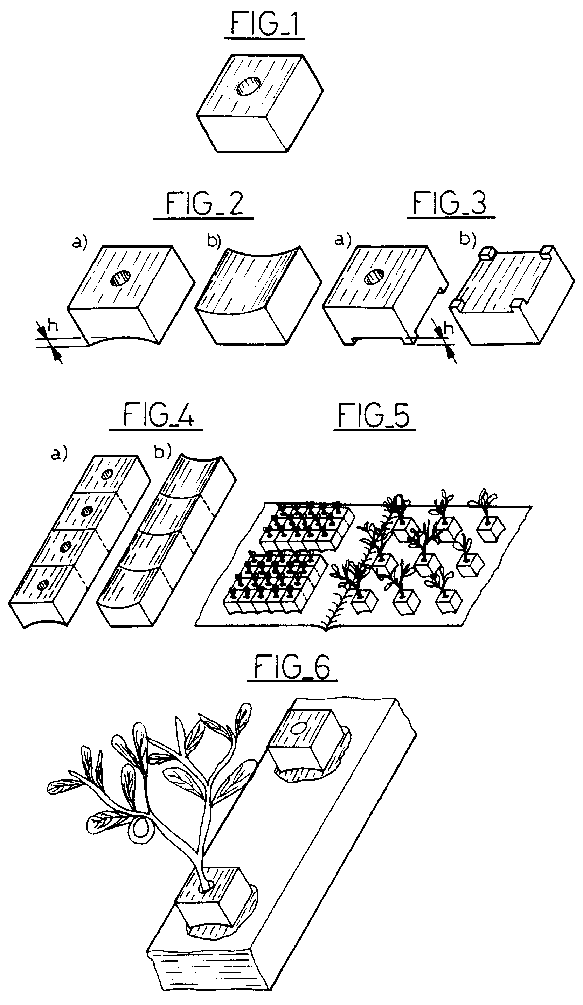

L'invention est décrite de façon plus détaillée dans la suite de la description, en faisant référence à la planche de dessins dans laquelle :
. **la figure 1** représente un substrat sous forme de cube traditionnel,
. **les figures 2a et 2b** présentent un mode de réalisation d'un cube selon l'invention en vue de dessus et de dessous,
. **les figures 3a et 3b** présentent un autre mode de réalisation d'un cube selon l'invention en vue de dessus et de dessous,
. **les figures 4a et 4b** présentent un ensemble de cubes en vue de dessus et de dessous,
. **la figure 5** montre, schématiquement, un mode d'utilisation des cubes dans les premières étapes de la culture des plants,
. **la figure 6** montre l'utilisation des cubes sur les pains de culture.

Le "cube" représenté est de forme traditionnelle pour les substrats laine de verre ou laine de roche. Ses dimensions, à titre indicatif, sont par exemple une base carrée de 120 x 120 mm et une hauteur de 75 mm.

A sa partie supérieure, le cube comporte généralement une cavité pour recevoir soit une graine préalablement germée sur un support dont la forme correspond à celle de la cavité, soit directement une graine. Dans les exploitations les plus importantes, il est usuel de procéder à la germination de façon séparée, ce qui permet encore un gain de place et améliore la rentabilité des installations en réduisant le temps d'immobilisation des surfaces disponibles.

Le cube est ordinairement revêtu d'un film imperméable sur ses faces latérales. Ce film a pour but de réduire la surface du substrat exposée à l'air ambiant dans les stades ultimes de la culture lorsque les cubes sont séparés les uns des autres (y compris lorsqu'ils sont disposés sur les pains de culture comme nous l'indiquerons ci-après à propos de la figure 6). En réduisant l'exposition à l'air ambiant on limite l'évaporation et les risques d'assèchement du substrat et la nécessité de rapprocher les alimentations successives en solution.

La figure 2 montre, en perspective, un cube selon l'invention dont la base n'est pas plane mais présente une forme cylindrique concave. Comme indiqué précédemment, cette configuration présente le grand avantage de ne faire reposer le cube que sur les génératrices correspondant à deux côtés de la base du cube. La surface de contact est alors extrêmement limitée par rapport à la surface de base.

Dans la pratique, même si le matériau est bien rigide il y a bien entendu un certain tassement de ces côtés porteurs. Néanmoins, à l'expérience, la largeur de la bande de contact avec le support ne dépasse pas ordinairement 3 à 5 mm de chaque côté, pour une largeur totale de l'ordre de 120 mm, soit un contact qui est bien inférieur au dixième de la surface de base.

Dans la réalisation représentée à la figure 1, la hauteur h entre le sommet de la partie cylindrique et la base des protubérances latérales est avantageusement limitée. D'une part, comme nous l'avons indiqué, une hauteur importante n'est pas nécessaire dans la mesure où il s'agit d'abord d'éviter la formation d'un film liquide continu à la base du cube. Pour cela, quelques millimètres entre la base du cube et le support sur lequel ils reposent suffisent. D'autre part, il est préférable de limiter cette hauteur pour, que dans une phase ultime de la culture, celle qui est conduite en plaçant les cubes sur des pains de culture comme représenté à la figure 6, le contact et la continuité du substrat soit convenablement assurés.

Il est important en effet, lorsque le cube est en position sur le pain, que les racines passent de l'un à l'autre sans une grande discontinuité dans le support. Si la distance séparant le fond du cube de la surface supérieure du pain devient trop importante, l'espace ainsi ménagé ne favorisera pas le passage des racines dans cette partie trop aérée. En pratique, les cubes comme les pains étant constitués d'un matériau semi-rigide, l'application sur le pain avec une légère pression lorsque la hauteur n'est pas trop élevée, permet pratiquement d'amener les deux surfaces en contact l'une de l'autre. Pour pouvoir obtenir cette mise en place satisfaisante, la hauteur h est maintenue de préférence inférieure à environ 12 mm.

Le cas échéant, pour réduire encore la distance entre le cube et le pain, il est possible de prévoir des nervures à la surface de ce dernier dans lesquelles les protubérances de la face inférieure du cube viennent se loger.

La production des cubes tels que représentés à la figure 2 peut avantageusement être conduite à partir de cubes à face plate qui sont, par exemple, passés dans une fraiseuse de forme correspondante.

La figure 3 montre un cube présentant des protubérances sous forme de pieds disposés aux quatre coins de la face inférieure du cube. Cette fois, la face inférieure est plane. Comme précédemment, la surface de contact avec le support est limitée de façon très significative, de telle sorte que le drainage s'effectue dans les meilleures conditions de rapidité.

Les protubérances, comme précédemment, sont avantageusement constituées dans le matériau même du substrat. La formation de ces pieds est obtenue, par exemple, par découpe. Les mêmes considérations relatives à la hauteur h des pieds sont applicables à ce mode de réalisation.

Dans les deux types de réalisation, comme dans ceux analogues, répondant à la définition de l'invention, le fait d'obtenir un bon drainage entre chaque opération d'irrigation favorise un développement satisfaisant des racines. Dans la pratique, les racines qui tendent de préférence à gagner la base du cube se trouvent stoppées dans leur progression par le contact avec l'air. Il se crée alors des ramifications latérales qui favorisent une colonisation plus complète de la masse du cube et une meilleure utilisation de celui-ci.

Les cubes, pour des raisons de commodité, sont ordinairement commercialisés par rangées formées de plusieurs cubes rassemblés, comme représenté à la figure 4. Les cubes sont alors généralement réunis les uns aux autres au moyen de bandes latérales adhésives qui, ultérieurement, peuvent être soit retirées, soit découpées pour individualiser les cubes. Les bandes adhésives, dans ce cas, sont appliquées sur le film imperméable qui entoure les faces latérales du cube.

La figure 5 représente, en coupe, un bac de culture des plants. Deux stades successifs de la culture y sont montrés. Dans le premier stade, représenté dans la partie gauche, les rangées de cubes telles que celles de la figure 4 sont disposées de façon contiguë sur le fond du bac d'irrigation. Dans le second stade, représenté à droite, les cubes sont désolidarisés et écartés les uns des autres.

Dans ce deuxième stade de la culture, la subirrigation des cubes traditionnels peut conduire au déplacement de ceux-ci à l'occasion des opérations de subirrigation. En effet, surtout si le sol n'est pas parfaitement horizontal ce qui peut être préféré pour améliorer le drainage, les cubes peuvent glisser sur le film liquide. L'absence de ce film selon l'invention écarte tout risque de déplacement des plants et donc l'obligation de rétablir manuellement une répartition momentanément compromise.

La figure 6 montre le dernier stade de la culture. Les cubes sont disposés sur les pains plus volumineux. Ordinairement, les pains sont aussi revêtus d'un film imperméable qui limite les pertes par évaporation. Le film en question ménage, à la partie supérieure, des ouvertures correspondant aux emplacements des cubes.

Comme indiqué précédemment, il est important d'assurer un bon contact entre le cube et le pain. Celui-ci était obtenu automatiquement lorsque la base des cubes est parfaitement plane. Ce contact ne peut pas être complet avec les cubes présentant des rainures.

L'usage des cubes selon l'invention, en jouant soit sur les légères déformations par simple pression, soit en ménageant des rainures sur le pain, assure un rapprochement satisfaisant des deux substrats de culture pour autant, dans le premier cas, que les conditions de hauteur des protubérances fixées précédemment aient été respectées.

## Revendications

1. Substrat pour la culture de plants constitué de laine minérale semi-rigide de forme parallélépipèdique, du type désigné sous le nom de "cube", dont la face inférieure repose sur des protubérances qui l'isolent du support sur lequel repose le cube, ces protubérances étant constituées du même matériau que celui du substrat, la surface de contact de ces protubérances n'excédant pas le dixième de la surface inférieure du substrat.

2. Substrat selon la revendication 1, caractérisé en ce que les protubérances sont constituées par les génératrices de la face inférieure de forme cylindrique concave.

3. Substrat selon la revendication 1, caractérisé en ce que les protubérances sont formées aux quatre coins de la face inférieure du substrat.

4. Substrat selon la revendication 1 dans lequel les protubérances ont une surface de contact qui n'excède pas le vingtième de la surface inférieure du substrat.

5. Substrat selon l'une quelconque des revendications précédentes dans lequel la hauteur des protubérances par rapport à la partie de la face inférieure la plus distante n'excède pas 12 mm.

## Claims

1. Substrate for plant cultivation in parallelepiped form, of the type known as a "cube", constituted by semi-rigid mineral wool, the underside of which rests on protuberances which isolate it from the support on which the cube is resting, these protuberances being constituted by the same material as that of the substrates, and the area of contact of these protuberances not exceeding one tenth of the lower surface area of the substrate.

2. Substrate according to Claim 1, characterised in that the protuberances consist of the generatrices of the underside which is of concavely cylindrical form.

3. Substrate according to Claim 1,characterised in that the protuberances are formed on the four corners of the underside of the substrate.

4. Substrate according to Claim 1, in which the protuberances have a contact area which does not exceed one twentieth of the area of the underside of the substrate.

5. Substrate according to any one of the preceding claims, in which the height of the protuberances in relation to the most remote part of the underside does not exceed 12 mm.

## Patentansprüche

1. Substrat für erdelose Kulturverfahren, bestehend aus halbsteifer Mineralwolle in Parallelepipedform von der Art, die als Block bezeichnet wird, deren Bodenfläche auf Vorsprüngen ruht, die sie von ihrer Aufstandsfläche trennen, wobei diese Vorsprünge aus demselben Material wie das Substrat selbst bestehen und die Aufstandsfläche dieser Vorsprünge nicht größer ist als der zehnte Teil der Bodenfläche des Substrats.

2. Substrat nach Anspruch 1, dadurch gekennzeichnet, daß die Vorsprünge aus den Kantenlinien der Bodenfläche mit zylindrisch-konkaver Ausbildung bestehen.

3. Substrat nach Anspruch 1, dadurch gekennzeichnet, daß die Vorsprünge an den vier Ecken der Bodenfläche des Substrats ausgebildet sind.

4. Substrat nach Anspruch 1, bei dem die Vorsprünge eine Aufstandsfläche aufweisen, die nicht größer ist als der zwanzigste Teil der Bodenfläche des Substrats.

5. Substrat nach einem der vorhergehenden Ansprüche, bei dem die Höhe der Vorsprünge relativ zu der am weitesten entfernten Partie der Bodenfläche 12 mm nicht überschreitet.
